# EUROPÄISCHE PATENTSCHRIFT

(11) **EP 1 955 016 B1**
(45) Veröffentlichungstag und Bekanntmachung des Hinweises auf die Patenterteilung: **15.04.2009**
(21) Anmeldenummer: 06806605.9
(22) Anmeldetag: 30.10.2006
(51) Int. Cl.: G01C 15/02

(54) **ZIELTAFEL ZUM POSITIONIEREN VON BAUELEMENTEN**
TARGET PLATE FOR POSITIONING COMPONENTS
PLAQUE DE CIBLAGE CONÇUE POUR POSITIONNER DES COMPOSANTS

(30) Priorität: 28.11.2005 US 287390
(43) Veröffentlichungstag der Anmeldung: 13.08.2008
(73) Patentinhaber: Leica Geosystems AG, 9435 Heerbrugg (CH)
(72) Erfinder: HINDERLING, Jürg, CH-9437 Marbach (CH); KIPFER, Peter, CH-9437 Marbach (CH); KEHL, Anton, CH-9464 Ruethi (CH); HARRINGTON, Jeffrey, Victor, Kent City, MI (US); SCHNEIDER, Klaus, A-6850 Dornbirn (AT)
(74) Vertreter: Büchel, Kaminski & Partner
(86) Internationale Anmeldenummer: PCT/EP2006/010399
(87) Internationale Veröffentlichungsnummer: WO 2007/059847

(56) Entgegenhaltungen:
- WO-A-97/08509
- DE-A1- 10 116 018
- DE-A1- 10 335 207
- US-A- 5 770 850

## Beschreibung

Die Erfindung betrifft eine Zieltafel zum Positionieren von Bauelementen nach dem Oberbegriff des Anspruchs 1 sowie ein entsprechendes optisches System.

Das Positionieren und Ausrichten von Werkstücken, Bauelementen oder auch Baumaschinen erfolgt im Stand der Technik häufig mittels optischer Systeme, welche die Vorteile schneller, genauer und berührungsloser Messungen bereitstellen. Die Positionierung kann dabei beispielsweise über eine Positionsbestimmung durch das System erfolgen, oft wird die Positionierung aber auch bezüglich von einem Sender emittierter sichtbarer optischer Strahlung "direkt" durchgeführt. So wird beispielsweise mittels eines positionierten und ausgerichteten Lasersenders ein Laserstrahl zur Erzeugung einer Referenzachse emittiert oder - z.B. mittels eines Rotationslasers - eine Referenzebene aufgespannt. Zur Bestimmung der Position bzw. zur Visualisierung der Strahlung werden im allgemeinen aktive oder passive Zielelemente verwendet.

Auch im Rohrleitungsbau werden zur genauen Verlegung der Rohre vorzugsweise optische Systeme eingesetzt, meist Laser-Referenzsysteme mit Kanalbaulasern und Zieltafeln. Die Ausrichtung des Laserstrahls wird oft zum Schwerelot vorgenommen, so dass solche Laservorrichtungen meist mit einem Neigungssensor versehen sind. Der Laser wird genau ausgerichtet bzw. im Startschacht bereits verlegter Rohrteile rohrzentriert ausgerichtet. Mittels des Lasers ist dann ein Referenzstrahl als Bezugsachse für - weitere - zu verlegende Rohre erzeugbar. Dazu wird in das Rohr eine Zieltafel eingesetzt. Die Zieltafel wird an dem einem Arbeiter zugewandten Ende des Rohres - gegenüber dem Startschacht - am oder im Rohr zentriert angebracht. Trifft der Laser-Referenzstrahl mittig eine - meist aufgedruckte - Zielmarkierung der Zieltafel, ist das Rohr korrekt positioniert und ausgerichtet.

Die Verlegung der Rohre geht dabei in der Regel folgendermassen vonstatten: Ein Bagger- oder Kranfahrer lässt das Rohr in eine Baugrube ab, während ein Arbeiter in oder neben der Baugrube steht und die Position und Ausrichtung des Rohres überwacht. Dabei gibt er Anweisungen an den Fahrer und korrigiert die Lage des Rohres gegebenenfalls manuell. Die Überwachung erfolgt anhand des Referenzsignals auf der am/im Rohr befestigten Zieltafel. Wird ein kollimierter Laserstrahl, wie bei Vorrichtungen des Stands der Technik, als Kreis auf der Zieltafel, beispielsweise einer Mattscheibe, abgebildet, muss die Sichtlinie des Arbeiters auf der Achse des Strahls liegen, wenn er die Position des Rohres gegenüber dem Strahl erkennen will. Der Arbeiter muss daher im Graben liegen oder sich ständig bücken, um das Rohr auszurichten. Bei unzugänglichem Graben ist die Positionierung mit einer solchen Vorrichtung nicht durchführbar.

Um einem Arbeiter zu ermöglichen, in aufrechter Stellung bzw. in einer Position von der Längsachse des Rohres entfernt, ein Signal zu empfangen, ist in der US 5,095,629 ein Target bzw. ein Zieltafelsystem beschrieben, welches auftreffende Laserstrahlung transmittiert und in einen gerichteten, kegelförmigen Winkelbereich ablenkt. Dazu sind in die Oberfläche des Targets Strukturen eingebracht, um den Strahl in eine bestimmte Richtung, beispielsweise in Richtung eines aufrecht stehenden Arbeiters, zu lenken. Die Strukturen der Oberfläche des Targets sind gitterförmig periodisch, und daher mit dem Nachteil behaftet, die Strahlung mit stark unregelmässiger Helligkeit in einen vorgegebenen Winkelbereich zu streuen. Bei bestimmten Richtungen oder Winkeln wird der Arbeiter geblendet hingegen bei unmittelbar benachbarten Winkeln ist der Lichtfleck auf der Zieltafel kaum mehr sichtbar. Diese Helligkeitsvariationen irritieren den Arbeiter. Auch produzieren solche Targets signifikante "side lobes" bzw. seitliche Anteile in, für die Anwendung, nicht relevante Richtungen, was bedeutet, dass der transmittierte Strahl entsprechend an Intensität verliert. Zudem ist die Ausbildung eines solchen Targets mit makroskopischen Strukturen anfällig gegen Umwelteinflüssen wie Schmutz, Nässe oder mechanischem Abrieb. Die Oberflächen müssen deshalb mit einer Deckplatte geschützt werden, so dass ein aufwendiger Aufbau folgt. Weiters ist die Struktur der Oberfläche zur Streuung der Strahlung in einen vorgegebenen Winkelbereich ausgeführt, bei Abweichungen aus der entsprechenden Position ist die Strahl-Projektion nur mehr schwach oder gar nicht mehr erkennbar.

Die DE 20 2004 000 503 U1 zeigt ein optisches System mit einer Videokamera, bei der die optische Achse starr parallel zur Längsachse eines zu verlegenden Rohres ausgerichtet ist und deren Objektiv in Richtung der Rohröffnungen weist. Zwischen der Videokamera und dem Rohr ist ein planflächiger, optisch teildurchlässiger Schirm angeordnet, der von der Videokamera scharf abgebildet und auf dem Videomonitor der Kamera angezeigt wird. Der Bediener kann den Auftreffpunkt des Lasers auf dem Schirm und somit die Ausrichtung des zu verlegenden Rohres erkennen. Durch die Möglichkeit der abgesetzten Beobachtung per Kabel oder Funk muss sich keine Person mehr vor Ort in den Graben begeben. Die Video-Kamera stellt jedoch ein komplexes empfindliches optisches Gerät dar, das im rauhen Baubetrieb leicht beschädigt wird. Zudem erfordert das optische System am Rohrende eine elektrische Versorgung, so dass die Anwendung einen erhöhten Aufwand erfordert. Auch verlangt das System von den Arbeitern auf der Baustelle entsprechende Installation und Bedienung, was unter anderem den reibungslosen Ablauf der Arbeiten behindern kann.

WO 97/08509 offenbart eine komplexe handgehaltene Zielvorrichtung für ein scannendes Lasernivelliersystem. Eine Strahlaufteilung und Strahlführung erfolgt innerhalb der Zielvorrichtung, die ein holographisches optisches Element zur Führung des Laserstrahls aufweist. US 5,770,850 beschreibt ein System zur Verfolgung eines optischen Kommunikationsstrahls mit einer holographischen Zielvorrichtung zur definierten Verformung des Laserstrahls.

Die Aufgabe der Erfindung ist die Bereitstellung einer Zieltafel für die Positionierung von Bauelementen, insbesondere Rohren oder Trägersystemen, bezüglich eines Referenzstrahls, die eine verbesserte Sichtbarkeit des Referenzstrahls bereitstellt.

Eine weitere Aufgabe ist eine einfach aufgebaute, leicht handhabbare und gegen Fehlmanipulation unempfindliche Zieltafel.

Eine weitere Aufgabe ist ein optisches System mit einer Strahlungsquelle zur Emission eines Referenzstrahls und einer Zieltafel zur verbesserten Visualisierung desselben, insbesondere bei Tageslicht.

Diese Aufgaben werden durch die Gegenstände der Merkmale der Ansprüche 1 bis 13 gelöst bzw. die Lösungen weitergebildet.

Erfindungsgemäss weist eine Zieltafel eine erste und zweite Fläche und ein optisches holographisches Element auf, wobei die erste und zweite Fläche optisch transmittiv ausgebildet sind und die zweite Fläche eine Zielmarkierung aufweist. An der Zieltafel ist weiters eine Halterung oder Befestigungseinrichtung zur Anordnung der Zieltafel an oder in einem - mit Hilfe der Zieltafel - zu positionierenden Bauelement vorsehbar. Genauso kann die Zieltafel aber in eine - externe - Halterung/Befestigung eingesetzt werden.

Zur Positionierung des Bauelements wird von einer Strahlungsquelle ein Referenzstrahl emittiert. Die Strahlungsquelle ist vorzugsweise ein Lasersender. Wenn im Folgenden von einem Laser als Strahlungsquelle die Rede ist, sind andere Quellen jedoch nicht ausgeschlossen, sondern alternativ ebenso verwendbar. Die Position und Emissionsrichtung des Lasers ist einstellbar. So lässt sich ein Strahl erzeugen, der eine Referenzachse festlegt.

Im Rohrleitungsbau wird der Laser entweder nach einem geplanten Rohrsystem, z.B. nach dem Plan eines Kanalsystem, entsprechend eingestellt, oder aber er wird bezüglich bereits verlegter Rohre angeordnet. Sind Rohre oder Rohrteile bereits plangemäss verlegt, so wird der Laser an einer - ersten - Rohröffnung positioniert und mittels des emittierten Referenzstrahls die Rohr-Längsachse nachgezeichnet. Damit können weitere Rohre an die bereits verlegten Rohre - an deren zweite Öffnung - angeschlossen und in Bezug auf die Referenzachse angeordnet werden, wobei ein exaktes Gefälle zum Lot eingehalten wird.

Zur exakten Positionierung des Rohres ist die Zieltafel nutzbar, indem sie an der nicht-anschliessenden Öffnung des zu verlegenden Rohres angeordnet wird. Die Anordnung erfolgt derart, dass die Rohr-Längsachse, d.h. die Rohrmitte, mit der Zielmarkierung der Zieltafel zusammenfällt. Zur Anordnung der Zieltafel ist eine lagestabile Verbindung derselben mit dem Rohr vorsehbar. Dies kann über eine - z.B. am Rohr befestigbare oder stabil im Rohr positionierbare - vorzugsweise mit Libelle versehene Halterung erfolgen. Genauso können Befestigungselemente direkt an der Zieltafel angebracht werden oder die Zieltafel kann bereits eine, gegebenenfalls einstückig mit derselben ausgebildete, Befestigungsmöglichkeit aufweisen. Grundsätzlich sind alle Arten von Befestigung oder Verbindung verwendbar, insbesondere auch an den Querschnitt des Rohres bzw. des zu positionierenden Bauelements angepasste Einheiten.

Die Zieltafel weist eine erste und eine zweite optisch transparente Fläche auf. Die Flächen bilden eine Vorder- und Rückseite eines Zieltafel-Grundkörpers, beispielsweise können sie die Vorder- und Rückseite eines Glaskörpers darstellen. In funktionaler Hinsicht ist ein optisch transparentes Kunststoff-Element als Zieltafel-Körper vorteilhaft. Der zweiflächige Körper kann in einer Vielzahl geometrischer Formen ausgebildet sein, z.B. als Rechteck, Quadrat oder als Scheibe. Er kann auch an die Geometrie eines zu positionierenden Bauelements angepasst sein, z.B bei einem Rohr als Bauelement in Grösse und Form an den Rohrquerschnitt.

Die Vorderseite oder erste Fläche ist dabei die der Strahlungsquelle zugewandte bzw. zuzuwendende Fläche, die Rückseite oder zweite Fläche ist vorzugsweise im Wesentlichen parallel zur ersten Fläche und dieser entgegengesetzt. Der bevorzugte Querschnitt des Grundkörpers - insbesondere da einfach und kostengünstig herstellbar - ist rechteckig oder quadratisch. Andere unter Umständen vorteilhafte geometrische Formen sind damit jedoch nicht ausgeschlossen.

Der - durchsichtige, farblose oder eingefärbte - Grundkörper ist optisch transparent, beispielsweise aus Kunststoff oder Glas. Auf die erste Fläche fallende Strahlung tritt durch die für die Strahlung durchlässige Fläche durch, ebenso durch die zweite durchlässige Fläche. Auf der zweiten Fläche wird die Strahlung schliesslich visualisiert, z.B. als sichtbarer Kreis.

Erfindungsgemäss weist die Zieltafel ein holographisches optisches Element - im Folgenden als HOE bezeichnet - auf, mittels welchen Elements der auf der zweiten Fläche visualisierte "Strahlfleck" erzeugt, aufgeweitet und in einen definierten Raumwinkelbereich gebeugt wird.

Holographische optische Elemente sind holographische Aufzeichnungen mit der Eigenschaft, die einfallende Strahlung in ein Wellenfeld komplexer räumlicher Gestalt umzuwandeln. Beispielsweise können die Eigenschaften optischer Elemente, wie Linsen, Gitter, Spiegel oder Strahlteiler emuliert werden. Insbesondere aber sind holographische Strukturen möglich, welche die räumliche Kohärenz der Laserwelle zerstören. Dadurch erst wird der Strahlfleck in der Ebene des Hologramms sichtbar. Im Gegensatz zu herkömmlichen Optiken lassen sich mit HOE's zudem weitaus kompliziertere Strahllenkungen verwirklichen, die bisher nicht realisierbar waren. Es sind insbesondere die digitalen, Computer generierten Hologramme, welche fast jede Gestaltung des gebeugten Wellenfeldes ermöglichen.

Bisherige, auch synthetische Hologramme waren jedoch nicht in der Lage, grosse Ablenkwinkel - wie sie beispielsweise im erfindungsgemässen Fall gefordert sind - zu erzeugen. Auch beeinflusste bisher der Einfallswinkel des Referenzstrahls auf das HOE nachteilig die Beugungseffizienz und das Beugungsverhalten. Folglich wurde die Form des gestreuten Lichtkegels nach dem Hologramm gestört. Weitere Probleme ergaben sich durch den eingeschränkten Wellenlängenbereich, wobei jedoch eine gattungsgemässe Zieltafel wunschgemäss gleichzeitig für Laser mit verschiedener Farbe einsetzbar sein soll. Eine weitere Schwäche lag in der fehlenden UV-Beständigkeit unter Sonnenbestrahlung.

Heute sind nun synthetische HOE's verfügbar, welche die genannten Nachteile nicht mehr haben. Durch feinste Strukturen im Submikrometer-Bereich lassen sich numerische Aperturen von grösser als 0,6 oder Fächerwinkel > 75 Grad erzeugen. Des Weiteren wird durch eine sogenannte "harmonic diffractive structure" die chromatische Aberration über den geforderten Spektralbereich eliminiert. Solche "harmonic diffractive structures" sind eine Kombination von Strukturen aus erster und höherer Beugungsordnung. Randomisierte, das heisst stark nicht-periodische Beugungsstrukturen, unterstützen die quasi-achromatische Strahlablenkung. Trotz der erreichten Achromasie gelingt es neuerdings auch, die Selektivität des Einfallswinkels auf die HOE-Platten zu unterdrücken. Die Flächen mit den "harmonic diffractive structures" sind quasizweidimensional, dadurch kann die mit dreidimensionalen Strukturen verbundene Braggbedingung umgangen werden. Das optische Wellenfeld nach dem HOE ist in erster Näherung unabhängig von der Verkippung der holographischen Fläche zum Referenzstrahl.

Ein weiterer Vorteil sind die effizienten Herstellverfahren synthetischer HOE's. Heute stehen beispielsweise diverse optische Kunststoffe aus den Materialgruppen Thermoplaste und Duroplaste zur Verfügung, welche durch Spritzgiessen, Formpressen oder Prägen kostengünstig und in hoher Stückzahl zu HOE's verarbeitet werden können. Durch neuartige chemische Additive wie Antioxidantien oder HALS (sterisch gehinderte Amine) kann auch deren UV-Beständigkeit gewährleistet werden.

Das HOE der erfindungsgemässen Zieltafel ist als optischer Diffusor für einen kollimierten Laserstrahl ausgeführt. Ein derartiger holographischer Diffusor kann die Wirkung einer strahlaufweitenden Linse aufweisen, oder in Kombination mit prismatisch wirkenden Strukturen Strahlaufweitung und Strahllenkung kombinieren. Parallel zu diesen Beugungseffekten erfolgt eine Reduktion der räumlichen Kohärenz der Laserphase. Die zumindest teilweise Zerstörung der Phasenbeziehungen beruht bei Phasenhologrammen auf einer pseudo-stochastischen Anordnung der Strukturen begleitet von grossen Ablenkwinkeln oder bei Amplituden-Hologrammen auf dekorrelierenden Streuzentren wie Silber-Halegonid-Komplexen. Es lassen sich also die entropischen Effekte einer diffusen Platte emulieren, da das HOE nicht auf eine optische Achse gebunden ist. Das erfindungsgemässe HOE-Bauteil weist in bekannter Art und Weise wenigstens ein Phasen-Hologramm oder schwach absorbierendes Amplituden-Hologramm mit folgenden Eigenschaften auf:
- hoher Transmissionseffizienz, > 80%,
- Vorgegebener Raumwinkelverteilung bis >100 Grad,
- Homogener Lichtverteilung im Streulichtkegel,
- < 2% Energie in nullter Ordnung,
- Unabhängig gegenüber der Polarisation des Referenzstrahls,
- uniformer Grad niedriger räumlicher Kohärenz,
- keine Moire-Erscheinungen,
- Achromasie über den geforderten Wellenlängenbereich.

Das wenigstens eine synthetische Hologramm kann im Prinzip auf allen bekannten Aufzeichnungsmaterialen bzw. Kopier- und Repliziermaterialien aufgenommen bzw. kopiert sein.

Um Hologramme mit den geforderten Eigenschaften zu erzeugen, sind computergenerierte Phasenstrukturen vorteilhaft. Die beugenden Strukturen sind als Oberflächenreliefe ausgebildet und erzeugen mit hoher Effizienz die geforderten optischen Eigenschaften. Natürlich sind auch Hologramme die optisch analog erzeugt/aufgenommen und/oder optisch kopiert werden denkbar.

Als Trägermaterialien kommen beispielsweise photosensitive Gläser, photosensitive Emulsionen oder optische Kunststoffe in Frage.

Besonders kostengünstig und die geforderten Streueigenschaften aufweisend sind Kunststoffe die nach dem Verfahren des Spritzgiessens, Spritzgiessens mit Nachpressen oder Formpressen hergestellt werden. Die holographische Information ist dabei in Form einer Oberflächenstruktur in der Spritz- oder Prägeform eingebracht. Ebenfalls realisierbar sind Hologramme hergestellt durch Replika bestehend aus UV-härtendem Kleber, UV-katalysierenden anorganischen-organischen Hybridpolymeren wie Sol-Gels oder anderen keramikartigen zur Replikation geeigneten Stoffen.

Zum holographischen Herstellverfahren nach dem Spritzgiessen werden optisch transparente Kunststoffe wie Polycarbonat, Polyester, Acrylate aber in letzter Zeit auch vermehrt Cyclo-Olefin (COC) und Copolyester (COP) verwendet.

So wird beim Herstellungsprozess für Prägehologramme ein sogenanntes Master-Hologramm (als "Kopiervorlage") auf einem speziellen hochauflösenden Aufnahmematerial, wie Photoresist, belichtet, dessen mikrofeine holographische Interferenzstruktur sich zu einem Oberflächenrelief entwickeln lässt. Durch galvanische Abformung kann dieses Oberflächenrelief in bekannter Art und Weise in - z.B. - metallisierte Folien eingeprägt werden. Damit ist ein - als holographisches Mikrorelief - auf verspiegelte Folie eingeprägtes Prägehologramm bereitstellbar. Derartige Prägehologramme sind maschinell vervielfältigbar und so in hohen Auflagen billig herstellbar.

Das Photoresist transferierte Master-Hologramm kann aber auch direkt in den darunterliegenden Glaswafer mittels Ätztechnologie transferiert werden, solche Hologramme sind bezüglich ihrer holographischen Interferenzstruktur von besonders hoher Qualität.

Vorteilhaft sind zudem computergenerierte Hologramme, sogenannte CGH's, wobei das Hologramm einfach mit dem Computer berechnet und die berechnete Struktur in eine lichtempfindliche Schicht geschrieben wird. Digitale Herstellungsverfahren wurden in den letzten Jahren ausgereift. Im Gegensatz zu analog gefertigten Hologrammen ist die Gestaltung der Beugungswirkung mittels numerischer Verfahren weitaus flexibler, ja nahezu unlimitiert. Auch wurde mit dem digitalen Verfahren das Materialangebot stark erweitert. Während bei der analogen Holographie photographische Materialien mit lichtempfindlicher Aufzeichnungsschicht benötigt werden, kann beim digitalen Verfahren - z.B. mittels lasergesteuerter, lithographischer Prozesse - die Bildinformation in ein geeignetes Trägermaterial übertragen werden.

Mit der synthetischen Erzeugung der Strukturen sind die Gestaltungsmöglichkeiten des austretenden Lichtstrahls erheblich erweitert. Weiters sind Beugungseffizienzen von über 90% erreichbar, insbesondere für mehrstufige Reliefstrukturen.

Durch entsprechende Ausführung eines holographischen Diffusors ist weiters die empfangene Strahlung in die gewünschte Richtung bzw. den gewünschten Raumwinkelbereich äusserst gleichmässig verteilbar. Unregelmässigkeiten in der Energieverteilung der verwendeten Strahlungsquelle können beseitigt werden, ebenso sind Rückstreueffekte bzw. Streuung in Richtungen ausserhalb des gewünschten Bereichs im Wesentlichen eliminierbar, sodass die Strahlung im Wesentlichen verlustfrei in die gewünschte Richtung gelenkt wird. Verluste durch ungestreutes Licht liegen unter 1%. So kann eine - in horizontale und vertikale Richtung - äusserst genau kontrollierte Energieverteilung eines aus dem Diffusor austretenden Strahls erreicht werden.

Insbesondere ist der Strahl in Raumwinkelbereiche nahezu beliebiger Form lenkbar.

Weisen die holographischen Diffusoren Oberflächenreliefe in lateraler Richtung eine unregelmässige Struktur auf, so ist eine gleichmässige Lichtverteilung mit homogener Beleuchtungsstärke erreichbar. Zudem wird mit stochastischen Strukturen in axialer Richtung eine verstärkt wellenlängenunabhängige Streuwirkung bereitgestellt. Durch Art und Präzision der Reliefstrukturen ist die Lichtverteilung im Streukegel gestaltbar. Durch die geeignet gewählten stochastischen Strukturen wird ein quasihomogenes Phasengemisch erreicht, wobei die Unterschiede der optischen Phasendifferenzen am Ort des Beobachters mehr als 100 Wellenlängen betragen können (Anzahl der Fresnelzonen > 100). Der Streukegel setzt sich daher aus randomisierten Beugungskegeln zusammen, wo sich Beugungsordnungen stark vermischen. Bei homogen ausgeleuchteten, vertikal und/oder horizontal ausgedehnten Raumwinkelbereichen ist der aufgeweitete Strahl aus einer Vielzahl von Richtungen erkennbar. Insbesondere ist die beugende Struktur so gestaltbar, dass die Bestrahlungsstärke hinter dem Diffusor unabhängig vom Streuwinkel ist. Durch die - gegenüber klassischen Diffusoren - erhöhte, beispielsweise doppelte, Transmissions- und Beugungs- bzw. Streueffizienz wird die Helligkeit und damit Sichtbarkeit des Strahls entsprechend gesteigert.

Der Raumwinkelbereich, in welchen die Strahlung mittels des holographischen optischen Diffusors gelenkt wird, ist über die Diffusor-Strukturen nahezu beliebig gestaltbar. So sind Diffusoren mit zirkularer, elliptischer, quadratischer oder rechteckiger Winkelverteilung herstellbar. Die Lichtverteilung innerhalb des kegelartigen Fächers kann Top-Hat-Verteilung, Cosinus-Verteilung, Cosinus-Verteilung zur n-ten Potenz, Dipol-Verteilung, Quadrupol-Verteilung und einer Vielzahl weiterer Winkelverteilungen annehmen.

Die erfindungsgemässe Zieltafel und ein optisches System werden nachfolgend anhand von in den Zeichnungen schematisch dargestellten Ausführungsbeispielen rein beispielhaft näher beschrieben. Im Einzelnen zeigen
- Fig.1: ein erfindungsgemässes optisches System als Positionier-System bei der Verlegung von Rohren;
- Fig.2A: eine erste Ausführungsform einer erfindungsgemässen Zieltafel;
- Fig.2B: eine zweite Ausführungsform der erfindungsgemässen Zieltafel;
- Fig.2C: eine dritte Ausführungsform einer erfindungsgemässen Zieltafel;
- Fig.3A-B: holographische Diffusor-Folien mit spezifisch ausgeleuchteten Winkelbereichen;
- Fig.4A-D: geometrische Formen für mittels der erfindungsgemässen Zieltafel ausleuchtbare Raumwinkelbereiche.

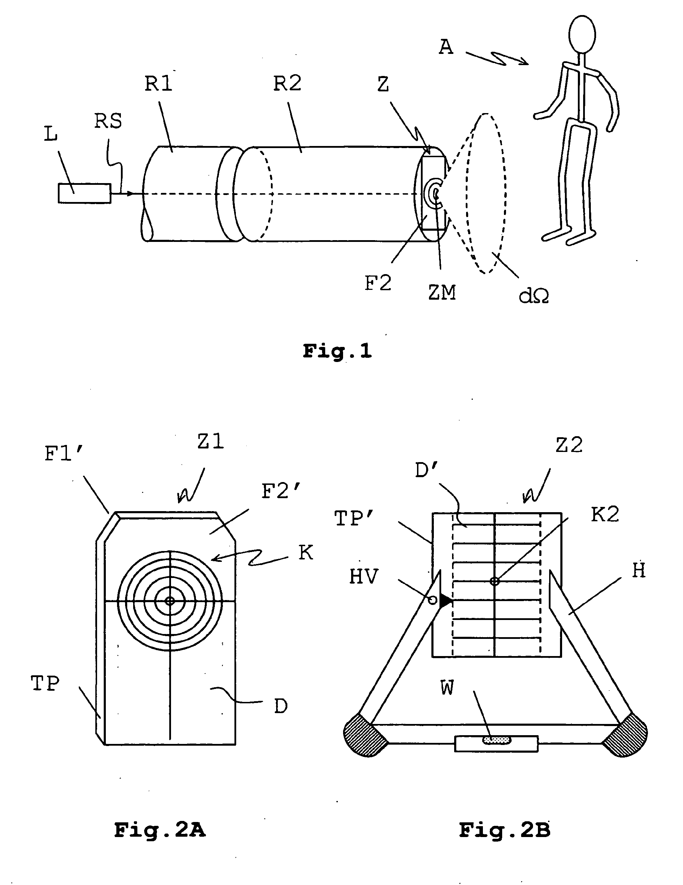

Figur 1 zeigt ein System mit einer erfindungsgemässen Zieltafel Z beim Verlegen von Rohren. Ein Kanallaser L als Strahlungsquelle emittiert einen Referenzstrahl RS entlang der Längsachse eines bereits verlegten ersten Rohres R1. An einem zweiten Rohr R2 ist eine erfindungsgemässe Zieltafel Z zentriert befestigt. Die Zieltafel Z weist zwei Flächen auf - eine erste Fläche in Richtung des Referenzstrahls RS und Rohrinneren und eine zweite aus dem zweiten Rohr R2 zeigende Fläche F2 - und ist für den Referenzstrahl durchlässig ausgebildet, beispielsweise aus Opalglas oder eingefärbten Kunststoffen. Auf der zweiten Fläche F2 der Zieltafel Z wird die Position des Referenzstrahls RS angezeigt. Die rechteckige Zieltafel Z weist in diesem Beispiel Polarkoordinaten, also symmetrisch um ihren Flächenmittelpunkt und aufgrund der rohrzentrierten Anordnung symmetrisch zur Rohrachse, mehrere konzentrische kreisförmige Markierungslinien auf, wobei der Ursprung des Polarkoordinatennetzes die Zielmarkierung ZM darstellt. Die Markierungslinien sind auf die zweite Fläche F2 aufgedruckt. Trifft die Zielmarkierung ZM den auf der Tafel angezeigten Referenzstrahl RS, ist das zweite Rohr R2 zum ersten Rohr R1 korrekt positioniert, wie in der Figur dargestellt. Zum Verlegen des Rohres wird dasselbe beispielsweise von einem Kran in einen vorbereiteten Graben herabgelassen. Ein Arbeiter A im oder neben dem Graben gibt dem Kranfahrer Anweisungen. Dazu muss für den Arbeiter A die Anzeige des Referenzstrahls auf der Zieltafel Z deutlich erkennbar sein. Zur besseren Erkennbarkeit/Sichtbarkeit der Referenzstrahl-Position auf der Tafel ist auf der zweiten Fläche F2 derselben erfindungsgemäss eine holographische Struktur als holographisches optisches Element, beispielsweise als Folie zum definierten Aufweiten des Referenzstrahls RS implementiert. Dieses holographische Element ist hier mit einer solchen Abstrahlcharakteristik ausgeführt, dass der Referenzstrahl RS kegelförmig in ein horizontal und vertikal ausgedehntes Raumwinkelelement dΩ geführt bzw. aufgeweitet wird. Für den Arbeiter A ist damit die Position des Referenzstrahls RS auf der Zieltafel Z auch von Positionen entfernt vom Rohr bzw. von der Strahlachse, beispielsweise ausserhalb eines Grabens, erkennbar.

Die erfindungsgemäss verwendete holographische Zieltafel Z besitzt die Vorteile grosser Beugungseffizienz, zudem ist ausserhalb der funktionalen Raumwinkelelements dΩ praktisch keine Strahlung vorhanden, was sich in einer nahezu verdoppelten Sichtbarkeit des Referenzlichtflecks gegenüber bekannten Diffusoren manifestiert. Durch die, nicht nur in lateraler Richtung sondern auch in die Tiefe randomisierte, holographische Struktur ist die Strahldichte der durch das Hologramm erzeugten scheinbaren Lichtquelle und damit auch die Sichtbarkeit innerhalb des funktionalen Raumwinkelelements dΩ homogen. Aufgrund der neuartigen feinabständigen Reliefstruktur im Sub-Wellenlängenbereich sind grosse Ablenkwinkel bis über 50 Grad erreichbar, sodass die Sichtbarkeit des Referenzstrahls RS auch bei steilen Winkeln noch gegeben ist.

Eine weitere Erhöhung der Sichtbarkeit kann durch eine optische Aufhellung der Trägerplatte aus Kunststoff erreicht werden, wie sie beispielsweise durch Beimengung von Fluoreszenzindikatoren zum Granulat des optischen Kunststoffes realisierbar ist.

Die Teilfiguren 2A, 2B und 2C zeigen Ausführungsformen einer erfindungsgemässen Zieltafel mit holographischem optischem Streuelement. Dabei können neben planaren Strukturen auch abweichende Geometrien oder Oberflächen als erfindungsgemässe Zieltafel Z verwendet werden, so sind bei gleicher Funktionalität beispielsweise auch gekrümmte Flächen oder räumlich ausgedehnte Objekte als Zieltafel Z einsetzbar.

In Figur 2A ist eine erste Ausführungsform einer erfindungsgemässen Zieltafel Z1 mit einer Trägerplatte TP mit abgeflachten Ecken als Zieltafel-Körper dargestellt. Die Trägerplatte TP wird dabei aus transparentem Kunststoff gebildet und weist eine erste und zweite Fläche F1', F2' auf, wobei auf der zweiten Fläche F2' kreisförmige konzentrische Markierungskreise K mit Sektoreinteilung im Sinne eines polaren Koordinatensystems mit einem innersten Kreis als Zielmarkierung aufgeprägt sind. Ein grauflächig dargestellter holographischer Diffusor D ist auf die zweite Fläche F2' aufgeklebt. Der Diffusor D ist als Lichtstrahlformendes Element auf transparenter Folie, z.B. in Form von Transmissionshologrammen, ausgeführt. Einfallendes Licht wir durch die Trägerplatte TP transmittiert, im Diffusor D gebeugt, und verlässt den Diffusor D als in einen vorgegebenen Raumwinkelbereich homogen aufgeweiteter Strahl. Mittels des holographischen Diffusors wird die einfallende Strahlung effizient und nahezu verlustfrei in den vorgegebenen Raumwinkelbereich gestreut.

In Figur 2B ist eine zweite Ausführungsform mit einer Platte TP' mit quadratischer holographischer Diffusor-Folie D' in einer Halterung H dargestellt. In dieser Halterung H ist die erfindungsgemässe Zieltafel Z2 leicht in einem Rohr - oder einem anderen Bauelement - placierbar. Mittels einer Höhenverstellungs-Einrichtung HV an der Halterung H ist die Zieltafel Z2 dann so verschiebbar, dass die Zentrumsmarkierung K2 mit der Bauelement-Achse zusammenfällt. In dieser zweiten Ausführungsform sind keine Polarkoordinaten sondern lineare, rechtwinklige Koordinaten auf der dem Benutzer zugewandten Seite aufgeprägt. Die Libelle W ist für vertikale Aufstellungen vorgesehen. Damit kann ein vom Referenzstrahl abweichendes Gefälle eingestellt oder geprüft werden.

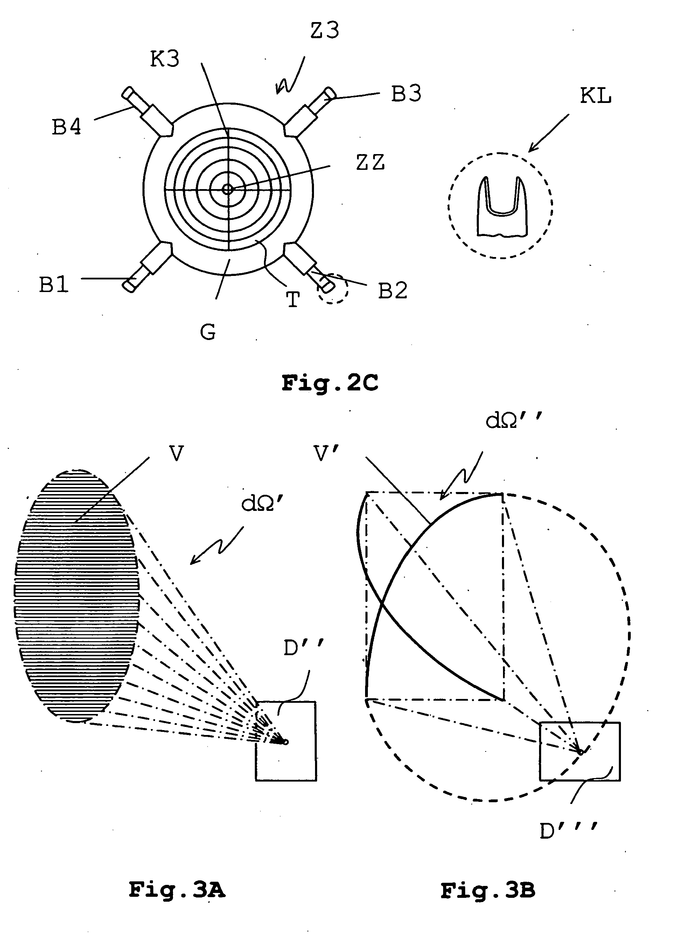

Figur 2C zeigt eine dritte Ausführungsform einer erfindungsgemässen Zieltafel als kreisförmige Zielscheibe Z3. Den Grundkörper der Zielscheibe Z3 bildet ein zweiflächiger Kunststoffkörper G. Auf eine Fläche des Kunststoffkörper G aufgebracht sind ein Ziel-Zentrum ZZ definierende Kreise. Das Kunststoff-Trägermaterial T mit übertragenem computergenerierten Hologramm stellt den holographischen Diffusor der Zielscheibe Z3 dar, wobei das Kunststoff-Trägermaterial T hier ebenfalls scheibenförmig zugeschnitten, beispielsweise ausgestanzt, und so an die Form der Zielscheibe Z3 angepasst ist. Die erfindungsgemässe Zielscheibe Z3 weist in dieser Ausführungsform vier Befestigungselemente B1, B2, B3, B4 auf. Diese können abnehmbar oder mit der Scheibe unlösbar, z.B. einstückig, verbunden sein. In der dargestellten Ausführung weisen die Befestigungselemente B1, B2, B3, B4 Klammern zur Fixierung der Zielscheibe Z3 an den Rohraussenwänden auf, wobei die Klammern in der Darstellung nach hinten aus der Zeichenebene herauszeigen. Die Befestigungseinrichtungen sind längenverstellbar und damit auf unterschiedliche Rohrdurchmesser einstellbar. Eine Alternative sind radiale Federpuffer, die die Zielscheibe Z3 automatisch zum Rohrzentrum zentriert halten können. Vorzugsweise können auch die Klammer-Durchmesser verstellt und so an die verschiedenen Rohrwand-Dicken angepasst werden. Die Figur 2C zeigt rechts skizzenhaft eine beispielhafte Klammer KL des Befestigungselements B2 vergrössert in Draufsicht.

In den Teilfiguren 3A und 3B sind zwei HOE's mit unterschiedlicher Abstrahlcharakteristik gezeigt. Für einfache Lösungen werden insbesondere mit Hologrammen geprägte, gespritzte oder spritzgeprägte holographische optische Elemente eingesetzt, da diese in Massenproduktion erzeugt werden können. Bei photolithographisch erzeugten Strukturen - die Aufnahme kann auch in mehreren Stufen erfolgt und damit noch genauer sein - werden diese auf der Basis eines sogenannten Master-Hologramms nachgebildet, von welchem dann Tausende bis Hunderttausende Replikationen herstellbar sind. Die Struktur und damit die Abstrahlcharakteristik können dabei nahezu beliebig gewählt werden.

In Figur 3A ist mit der holographischen Diffusor-Folie D" ein kegelförmig ausgeleuchteter Winkelbereich dΩ' mit homogener, konstanter Verteilung der Strahlstärke V erreichbar, in Figur 3B wird die Strahlung durch eine Diffusor-Folie D''' in einen rechteckig geformten Bereich dΩ'' mit cosinus- oder Lambert-verteilter Strahlstärke gelenkt. Mittels derartiger holographischer optischer Elemente ist auch Strahlung unregelmässiger Lichtquellen, im Fall von Laserlicht mit gaussverteiltem Strahlprofil, homogenisierbar, das heisst jeweilige Raumbereiche gleichmässig und mit hoher Intensität ausleuchtbar, unabhängig vom Auftreffpunkt der Laserstrahlung. Vorteilhaft ist eine Lambert-verteilte Strahlstärke innerhalb des Raumwinkelbereichs dΩ''. Bei Lambert-verteilter Strahlstärke V' erscheint die scheinbare Lichtquelle, insbesondere der Lichtfleck auf der Zieltafel, unter jedem Betrachtungswinkel im Mittel gleich hell. Durch das exakte Lenken mittels eines holographischen Diffusors kann Strahlung in gewünscht geformte Raumwinkelbereiche nahezu ohne Verlust gerichtet und die Sichtbarkeit der Strahlung im Vergleich zu konventionellen Diffusoren nahezu verdoppelt werden, denn insbesondere ausserhalb des Raumwinkelbereichs dΩ'' wird praktisch keine Lichtleistung verschwendet.

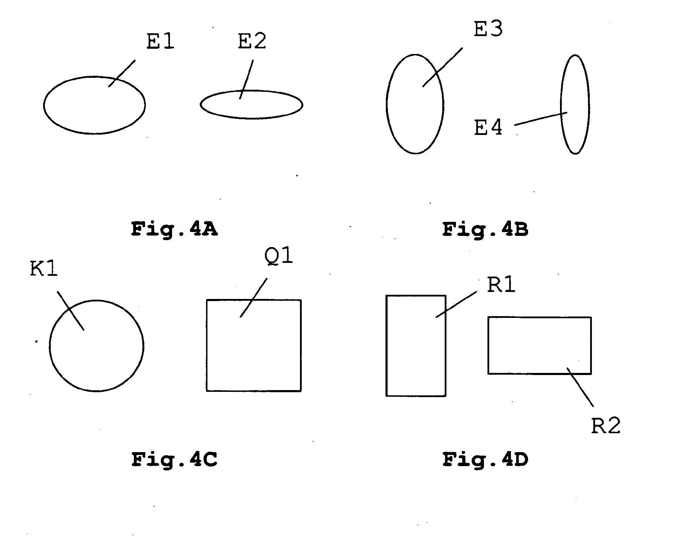

Verschiedene beispielhafte geometrische Formen für Winkelbereiche, in welche Bereiche Strahlung mittels HOE's lenkbar ist, sind in den Teilfiguren 4A-4D gezeigt. Die Linien markieren die Breite der jeweiligen kegelförmigen Raumwinkelbereiche bei einer Strahlstärke von 50% des Maximalwerts (FWHM = Full width half maximum). Dabei zeigen die Figuren 4A und 4B elliptische Winkelbereiche E1-E4, wobei die Ellipsen je nach Diffusor-Struktur horizontal oder vertikal unterschiedlich ausgedehnt sein können. Die Strahlstärke der Lichtverteilung kann innerhalb der kegelartigen Bereiche beliebige Profile annehmen. Beispielsweise ist bei einer Lambertverteilung die mittlere Strahldichte oder visuelle Helligkeit für einen Betrachter konstant. Ausserhalb der kegelartigen Bereiche soll die Strahlstärke Null betragen damit keine Strahlungsleistung verloren geht. In Fig. 4c sind ein kreisförmiger sowie ein quadratischer Bereich K1, Q1 skizziert. Die Fig. 4D zeigt ein erstes Rechteck und das erste Rechteck R1 um 90° gedreht als zweites Rechteck R2. Es versteht sich, dass HOE's je nach Ausführung bzw. Profil weitere, auch nicht kegelartige Winkelbereiche ausleuchten können. Diese Möglichkeit besteht z.B. bei Verwendung von 2 räumlich getrennten Hologrammen, beispielsweise das eine auf der Eintritts- und das andere auf der Austrittsseite der Trägerplatte. Mit zwei räumlich getrennten Hologrammen besteht zudem die Möglichkeit, die räumliche Kohärenz des Laserstrahls komplett zu zerstören. Die gesamte Lichtleistung scheint dann für einen Betrachter von der scheinbaren Lichtquelle auf dem Hologramm auszugehen. Eine solche Hologrammanordnung ermöglicht zudem eine Homogenisierung des Lichtflecks auf der Zieltafel selbst unabhängig vom Intensitätsprofil des Laserstrahls.

## Patentansprüche

1. Zieltafel (Z,Z1,Z2,Z3) zum Positionieren von Bauelementen, insbesondere von Rohren (R1,R2), mit
- gegebenenfalls einer Halterung (H) zur, insbesondere zentrierten, Anordnung am oder im Bauelement,
- einer ersten optisch transparenten Fläche (F1) und
- einer zweiten optisch transparenten Fläche (F2) mit einer Zielmarkierung (ZM) zur Visualisierung eines von einer optischen Strahlquelle emittierten Referenzstrahls (RS),
**dadurch gekennzeichnet, dass**
die Zieltafel (Z,Z1,Z2,Z3) ein holographisches optisches Element zur Aufweitung und Beugung des Referenzstrahls (RS) in einen definierten Raumwinkelbereich (dΩ,dΩ',dΩ'') aufweist, wobei das holographische optische Element so ausgebildet ist, dass für die Phase eines Laserstrahls eine zumindest partielle Phasenzerstörung zur Reduktion der räumlichen Kohärenz erfolgt.

2. Zieltafel (Z,Z1,Z2,Z3) nach Anspruch 1,
**dadurch gekennzeichnet, dass**
das holographische optische Element optisch transmittiv ausgebildet ist.

3. Zieltafel (Z,Z1,22,Z3) nach Anspruch 1 oder 2,
**dadurch gekennzeichnet, dass**
das holographische optische Element
- eine holographische Platte oder
- eine holographische Folie oder
- einen holographischen Film
aufweist.

4. Zieltafel (Z,Z1,Z2,Z3) nach einem der Ansprüche 1 bis 3,
**dadurch gekennzeichnet, dass**
das holographische optische Element wenigstens ein computer-generiertes Hologramm aufweist.

5. Zieltafel (Z,Z1,Z2,Z3) nach einem der vorhergehenden Ansprüche, **dadurch gekennzeichnet, dass**
das holographische optische Element eine mixed-order diffraktive Struktur aufweist.

6. Zieltafel (Z,Z1,Z2,Z3) nach einem der vorhergehenden Ansprüche, **dadurch gekennzeichnet, dass**
das holographische optische Element ein abformbares Oberflächenrelief aufweist.

7. Zieltafel (Z,Z1,Z2,Z3) nach einem der vorhergehenden Ansprüche,
**dadurch gekennzeichnet, dass**
das holographische optische Element so ausgebildet ist, dass die Aufweitung und Beugung des Referenzstrahls (RS) in einen
- quadratischen oder
- rechteckigen oder
- elliptischen oder
- kreisförmigen
Raumwinkelbereich (dΩ,dΩ',dΩ'') erfolgt.

8. Zieltafel (Z,Z1,Z2,Z3) nach einem der vorhergehenden Ansprüche,
**dadurch gekennzeichnet, dass**
der Raumwinkelbereich (dΩ,dΩ',dΩ'') wenigstens einen
- horizontalen Winkelbereich von ±45° und/oder
- vertikalen Winkelbereich von ±45°
umfasst.

9. Zieltafel (Z,Z1,Z2,Z3) nach einem der vorhergehenden Ansprüche,
**dadurch gekennzeichnet, dass**
das holographische optische Element so ausgebildet ist, dass die Lichtverteilung im bestrahlten Raumwinkelbereich (dΩ,dΩ',dΩ'')
- homogenen/konstanten,
- cosinus-verteilten,
- cosinus zur n-ten Potenz verteilten,
- dipol-verteilten,
- quadrupol-verteilten oder
- lambert-verteilten
Verlauf hat.

10. Zieltafel (Z,Z1,Z2,Z3) nach einem der vorhergehenden Ansprüche,
**dadurch gekennzeichnet, dass**
die optische Leistung in der nullten Beugungsordnung weniger als 2% beträgt.

11. Zieltafel (Z,Z1,Z2,Z3) nach einem der vorhergehenden Ansprüche,
**dadurch gekennzeichnet, dass**
die Streueffizienz für wenigstens einen Bereich des Einfallswinkels des Referenzstrahls (RS) zur Zieltafel (Z,Z1,Z2,Z3) von +/- 15 Grad um höchstens 10% abnimmt.

12. Zieltafel (Z,Z1,Z2,Z3) nach einem der vorhergehenden Ansprüche,
**dadurch gekennzeichnet, dass**
das holographische optische Element an der zweiten Fläche (F2) angeordnet ist, insbesondere aufgeklebt.

13. Optisches System zum Positionieren von Bauelementen, insbesondere Rohren (R1,R2) mit
- einer optischen Strahlquelle zur Emission eines Referenzstrahls (RS) und
- einer Zieltafel (Z,Z1,Z2,Z3) nach einem der
vorangehenden Ansprüche 1 bis 12.

## Claims

1. Target plate (Z, Z1, Z2, Z3) for positioning components, in particular pipes (R1, R2), comprising
- if appropriate, a holder (H) for arrangement, in particular centred arrangement, on or in the component,
- a first optically transparent surface (F1) and
- a second optically transparent surface (F2) having a target mark (ZM) for visualising a reference beam (RS) emitted by an optical beam source,
**characterized in that** the target plate (Z, Z1 Z2, Z3) has a holographic optical element for diverging and diffracting the reference beam (RS) in a defined solid angle region (dΩ, dΩ', dΩ''), the holographic optical element being formed in such a way that at least partial phase destruction for reducing the spatial coherence is effected for the phase of a laser beam.

2. Target plate (Z, Z1 Z2, Z3) according to Claim 1, **characterized in that** the holographic optical element is formed so as to be optically transmittive.

3. Target plate (Z, Z1 Z2, Z3) according to Claim 1 or 2, **characterized in that** the holographic optical element has
- a holographic plate or
- a holographic foil or
- a holographic film.

4. Target plate (Z, Z1 Z2, Z3) according to any of Claims 1 to 3, **characterized in that** the holographic optical element has at least one computer-generated hologram.

5. Target plate (Z, Z1 Z2, Z3) according to any of the preceding claims, **characterized in that** the holographic optical element has a mixed-order diffractive structure.

6. Target plate (Z, Z1 Z2, Z3) according to any of the preceding claims, **characterized in that** the holographic optical element has a surface relief of which an impression can be taken.

7. Target plate (Z, Z1 Z2, Z3) according to any of the preceding claims, **characterized in that** the holographic optical element is formed in such a way that the divergence and diffraction of the reference beam (RS) takes place in a
- square or
- rectangular or
- elliptical or
- circular
solid angle region (dΩ, dΩ', dΩ'').

8. Target plate (Z, Z1, Z2, Z3) according to any of the preceding claims, **characterized in that** the solid angle region (dΩ, dΩ', dΩ'') comprises at least one
- horizontal angle range of ±45° and/or
- vertical angle range of ±45°.

9. Target plate (Z, Z1 Z2, Z3) according to any of the preceding claims, **characterized in that** the holographic optical element is formed in such a way that the light distribution in the irradiated solid angle region (dΩ, dΩ', dΩ'') has a
- homogenous/constant distribution,
- cosine distribution,
- cosine to the n th power distribution,
- dipole distribution
- quadrupole distribution or
- Lambert distribution.

10. Target plate (Z, Z1, Z2, Z3) according to any of the preceding claims, **characterized in that** the optical power in the zero th diffraction order is less than 2%.

11. Target plate (Z, Z1, Z2, Z3) according to any of the preceding claims, **characterized in that** the scattering efficiency for at least one range of the angle of incidence of the reference beam (RS) to the target plate (Z, Z1, Z2, Z3) of ±15 degrees decreases by at most 10%.

12. Target plate (Z1 Z2, Z3) according to any of the preceding claims, **characterized in that** the holographic optical element is arranged, in particular adhesively bonded, on the second surface (F2).

13. Optical system for positioning components, in particular pipes (R1, R2), comprising
- an optical beam source for emission of a reference beam (RS) and
- a target plate (Z, Z1, Z2, Z3) according to any of the preceding Claims 1 to 12.

## Revendications

1. Plaque de ciblage (Z, Z1, Z2, Z3) pour le positionnement de composants, en particulier de tubes (R1, R2), avec :
- le cas échéant, une fixation (H) pour, en particulier, centrer, agencement sur ou dans le composant,
- une première surface (F1) optiquement transparente, et
- une deuxième surface (F2) optiquement transparente, avec un marquage de cible, pour la visualisation d'un rayon de référence (RS) émis par une source de rayonnement optique,
**caractérisée en ce que**
la plaque de ciblage (Z, Z1, Z2, Z3) présente un élément optique holographique, pour élargir et diffracter le rayon de référence (RS) dans une plage d'angles solides (dΩ, dΩ', dΩ") définie, l'élément optique holographique étant réalisé de manière que, pour la phase d'un rayon laser, une destruction de phase au moins partielle se produise, pour réduire la cohérence spatiale.

2. Plaque de ciblage (Z, Z1, Z2, Z3) selon la revendication 1,
**caractérisée en ce que**
l'élément optique holographique est optiquement transmissif.

3. Plaque de ciblage (Z, Z1, Z2, Z3) selon la revendication 1 ou 2,
**caractérisée en ce que**
l'élément optique holographique présente :
- une plaque holographique, ou
- une feuille holographique, ou
- un film holographique.

4. Plaque de ciblage (Z, Z1, Z2, Z3) selon l'une des revendications 1 à 3,
**caractérisée en ce que**
l'élément optique holographique présente au moins un hologramme généré par ordinateur.

5. Plaque de ciblage (Z, Z1, Z2, Z3) selon l'une des revendications précédentes,
**caractérisée en ce que**
l'élément optique holographique présente une structure diffractive d'ordre mélangé.

6. Plaque de ciblage (Z, Z1, Z2, Z3) selon l'une des revendications précédentes,
**caractérisée en ce que**
l'élément optique holographique présente un relief de surface moulable.

7. Plaque de ciblage (Z, Z1, Z2, Z3) selon l'une des revendications précédentes,
**caractérisée en ce que**
l'élément optique holographique est réalisée de manière que l'élargissement et la diffraction du rayon de référence (RS) s'effectue dans une plage d'angles solides (dΩ, dΩ', dΩ")
- carrée, ou
- rectangulaire,
- elliptique, ou
- circulaire.

8. Plaque de ciblage (Z, Z1, Z2, Z3) selon l'une des revendications précédentes,
**caractérisée en ce que**
la plage d'angles solides (dΩ, dΩ', dΩ") comprend au moins
- une plage angulaire horizontale de ±45° et/ou
- une plage angulaire verticale de ±45°.

9. Plaque de ciblage (Z, Z1, Z2, Z3) selon l'une des revendications précédentes,
**caractérisée en ce que**
l'élément optique holographique est réalisé de manière que la distribution de lumière dans la plage d'angles solides (dΩ, dΩ', dΩ") ait une allure
- homogène/constante,
- répondant à une distribution cosinus,
- répondant à une distribution de puissance n,
- répondant à une distribution en dipôles,
- répondant à une distribution en quadripôles, ou
- répondant à une distribution selon la loi de Lambert.

10. Plaque de ciblage (Z, Z1, Z2, Z3) selon l'une des revendications précédentes,
**caractérisée en ce que**
la puissance optique, dans l'ordre de diffraction zéro, est inférieure à 2%.

11. Plaque de ciblage (Z, Z1, Z2, Z3) selon l'une des revendications précédentes,
**caractérisée en ce que** le coefficient de dispersion, pour au moins une plage de l'angle d'incidence du rayon de référence (RS) par rapport à la plaque de ciblage (Z, Z1, Z2, Z3) de +/- 15 degrés, diminue au maximum de 10%.,

12. Plaque de ciblage (Z, Z1, Z2, Z3) selon l'une des revendications précédentes,
**caractérisée en ce que**
l'élément optique holographique est disposé, en particulier collé, sur la deuxième surface (F2).

13. Système optique, pour le positionnement de composants, en particulier de tubes (R1, R2), comprenant :
- une source de rayonnement optique pour émission d'un rayon de référence (RS), et
- une plaque de ciblage (Z, Z1, Z2, Z3) selon l'une des revendications 1 à 12 précédentes.
